# FASCICULE DE BREVET EUROPEEN

(11) **EP 1 728 164 B1**
(45) Date de publication et mention de la délivrance du brevet: **28.11.2012**
(21) Numéro de dépôt: 05739678.0
(22) Date de dépôt: 14.03.2005
(51) Int. Cl.: G06F 13/10

(54) **PROCEDE POUR L'EMULATION LOGICIELLE DE DISQUES DURS D'UNE PLATE-FORME INFORMATIQUE AU NIVEAU DU SYSTEME D'EXPLOITATION AVEC GESTION PARAMETRABLE A LA VOLEE DES REQUETES D'ECRITURE ET DE LECTURE**
VERFAHREN ZUR SOFTWAREEMULATION DER FESTPLATTEN EINER RECHNERPLATTFORM AM BETRIEBSSYSTEM DAVON MIT PARAMETERADAPTIVER ON-THE-FLY-VERWALTUNG VON LESE-/SCHREIB-ANFORDERUNGEN
METHOD FOR THE SOFTWARE EMULATION OF THE HARD DISKS OF A COMPUTER PLATFORM AT THE OPERATING SYSTEM THEREOF, WITH ON-THE-FLY PARAMETER-ADAPTIVE MANAGEMENT OF READ AND WRITE REQUESTS

(30) Priorité: 16.03.2004 FR 0402771
(43) Date de publication de la demande: 06.12.2006
(73) Titulaire: HEWLETT-PACKARD DEVELOPMENT COMPANY, L.P., Houston, TX 77070 (US)
(72) Inventeur: GATTEGNO, Yves, F-94240 l'Hay les Roses (FR)
(74) Mandataire: Schoppe, Fritz
(86) Numéro de dépôt international: PCT/FR2005/000609
(87) Numéro de publication internationale: WO 2005/101202

(56) Documents cités:
- US-A- 5 131 089
- US-A1- 2003 191 623
- US-B1- 6 574 588

## Description

La présente invention concerne un procédé pour l'émulation logicielle de disques durs d'une plate-forme informatique au niveau du système d'exploitation, avec gestion paramétrable à la volée des requêtes d'écriture et de lecture.

Elle permet notamment l'émulation complète d'un ou plusieurs disques durs émulés, vus comme de véritables disques durs par le système d'exploitation d'une plate-forme informatique, telle un ordinateur personnel (PC) ; les données contenues dans un disque dur émulé peuvent être stockées sur tout type de support, tel un serveur sur un réseau, un CD-R, un DVD-ROM, une mémoire flash, un disque dur externe.

L'invention permet ainsi l'émulation complète d'un disque dur système, c'est-à-dire un disque dur permettant l'amorçage de l'ordinateur et subséquemment le chargement complet du système d'exploitation dont les composants sont stockés dans ledit disque dur émulé.

D'une manière générale, on sait que dans les micro-ordinateurs utilisés à l'heure actuelle, le système d'exploitation, les programmes applicatifs ainsi que les données propres aux utilisateurs, sont stockés dans un disque dur accessible par l'unité centrale de l'ordinateur.

Les disques durs se présentent comme des empilements de plusieurs plateaux dont les différentes faces sont accessibles par des peignes de têtes ; sur chaque piste sont inscrits des secteurs.

Par exemple, pour les micro-ordinateurs compatibles "IBM PC", le "BIOS" (système de base d'entrées/sorties) lit ou écrit les informations venant ou allant au disque dur à l'aide d'une boucle de programme. Les programmes applicatifs peuvent utiliser le BIOS pour lire ou écrire sur le disque dur, soit directement au niveau des secteurs via l'interruption logicielle "int 13h", soit plus fréquemment au travers du système de fichiers via l'interruption logicielle "int 21h".

Le premier secteur du disque dur contient un programme spécial chargé en mémoire et lancé par le "BIOS" au démarrage de l'ordinateur. Ce programme, nommé "MBR" (Master Boot Record) gère un éventuel partitionnement du disque en plusieurs sous-espaces, appelés "partitions". Ces "partitions" peuvent être attribuées à des systèmes d'exploitation différents que l'utilisateur peut choisir au démarrage de l'ordinateur. Une fois que ce choix est réalisé, un programme (appelé "BOOT") contenu dans les premiers secteurs de chaque partition est chargé à son tour et lancé. Son rôle est de charger le système d'exploitation stocké sur la partition correspondante du disque dur et de le lancer. Les secteurs suivants servent à gérer l'espace réservé aux fichiers.

Ainsi, lors de la mise en route, le micro-ordinateur procède au chargement dans sa mémoire vive (RAM) du système d'exploitation contenu dans le disque dur, puis les logiciels applicatifs ainsi que les données utilisateurs.

Il s'avère que lors de ces opérations de mise en route, la moindre anomalie provoque fréquemment une déstabilisation engendrant un blocage du micro-ordinateur.

Par ailleurs, dans un but de sécurisation, dans de nombreux cas, l'accès au système d'exploitation et/ou à certains fichiers contenus dans le disque dur n'est possible que par certains utilisateurs identifiés après saisie et reconnaissance d'un mot de passe (identifiant). On constate, en pratique, que dans un système en réseau exploité par de nombreux utilisateurs, ce type de sécurité pose de plus en plus de problèmes en raison de la complexité de sa gestion.

US 5,131,089 A décrire un système pour provoquer une mémoire à semi-solides ordinateur pour émuler un disque magnétique monté dans un lecteur de disque. Le système comprend deux cartes RAM amovibles et deux ROM. Instructions du programme codé dans le firmware dans le système BIOS traduire les demandes de service de disque à partir du logiciel en cours d'exécution sur l'ordinateur en commandes appropriées et adresses sur les cartes de mémoire vive ou sur la ROM. Le système permet un logiciel écrit pour une utilisation avec des disquettes pour être utilisés avec de solides dispositifs de mémoire à semi-tels que les cartes mémoire RAM ou ROM sans modification du logiciel.

L'invention a donc plus particulièrement pour but de supprimer ces inconvénients, grâce à un procédé mettant en oeuvre l'émulation logicielle totale de disques durs au niveau des blocs de données, aussi appelés secteurs, ou au niveau du système de fichier, permettant ainsi d'utiliser dans les disques durs émulés tout type de systèmes de fichiers acceptés par le système d'exploitation.

Le procédé selon l'invention est défini dans la revendication indépendante 1. D'autres modes de réalisation de l'invention sont spécifiés dans les revendications dépendantes attenantes.

Selon l'invention, ce procédé est plus particulièrement caractérisé en ce qu'il consiste à créer dans une première étape une représentation d'un disque dur réel dans laquelle peuvent être adaptés les ordres de chargement et d'exécution de certains des composants du système d'exploitation d'une plate-forme informatique, puis de charger sur ladite plate-forme informatique au cours d'une deuxième étape un ou plusieurs pilotes de périphérique parmi lesquels au moins un des pilotes de périphérique permet le dialogue réel avec un support de stockage de données contenant les données du disque dur émulé, puis à simuler dans une troisième étape le comportement d'un véritable disque dur pour le système d'exploitation.

En ce qui concerne le terme "support", on entend ici et dans le reste de la description, tout système permettant de conserver de façon volatile ou non volatile des données informatiques ; ce terme désigne aussi bien un disque dur, un CD-ROM, une bande magnétique, ou un service de données accessibles par un réseau informatique.

Par ailleurs, l'invention prévoie un traitement spécifique des opérations d'écriture effectuées dans le disque dur émulé. Par exemple, si le support de stockage de données dudit disque dur émulé est un média non réinscriptible à la volée (un CD-R par exemple), les données écrites pourront être stockées en mémoire vive ou sur un support acceptant les écritures à la volée, tel un véritable disque dur local. Le traitement spécifique des écritures permet de proposer des disques durs émulés « volatils », c'est à dire ne retenant pas les modifications effectués dans le disque dur émulé après un redémarrage de l'émulation, des émulations standards, où le disque dur émulé se comporte exactement comme un disque dur normal. D'autres types de gestion des écritures sont prévus et permettent d'autres utilisations de l'invention.

L'invention prévoit également que, si le support de stockage de données contenant les données du disque dur émulé le permet, par exemple si le support est un fichier stocké sur un serveur d'un réseau, plusieurs ordinateurs puissent accéder simultanément au disque dur émulé à travers ladite émulation. Dans ce cas, une méthode de diffusion dite "multicast" pourra être utilisée, de façon à réduire significativement la bande passante utilisée pour les lectures quasi-simultanées, demandées par plusieurs ordinateurs « clients », qui s'effectueraient sur les mêmes parties du disque dur émulé.

Grâce à ces dispositions, l'invention permet de résoudre les problèmes de déstabilisation lors de la mise en route de la plateforme informatique et les problèmes de sécurité précédemment évoqués et de simplifier grandement l'administration des plates-formes informatiques.

Par ailleurs, dans le cas d'un système à réseau exploité par plusieurs utilisateurs, chaque poste n'est plus lié aux applications chargées localement ni aux utilisateurs habituels de la plate-forme. Par ailleurs, les erreurs effectuées par les utilisateurs n'ont plus d'incidence sur le fonctionnement global du système à réseau.

Ainsi, d'une façon plus précise, le procédé selon l'invention permet le dialogue entre le disque dur émulé et le système d'exploitation «à la manière » d'un véritable disque dur grâce au truchement d'un des pilotes de périphériques ci-dessus mentionnés, en simulant le comportement d'un véritable disque dur pour le système d'exploitation, à toutes les phases du processus d'amorçage, aussi bien pendant la phase dévolue traditionnellement au micro logiciel (BIOS par exemple) que pendant les phases prises en charges par le système d'exploitation lui-même, et en particulier par les composants de gestion des disques durs du système d'exploitation. Cette émulation totale, comprenant la possibilité d'amorçage, peut nécessiter des adaptations des ordres de chargement et d'exécution de certains des composants du système d'exploitation.

Une gestion des requêtes d'écritures que le système d'exploitation émet vers le disque dur émulé, est effectuée au niveau des pilotes de périphériques et/ou au niveau d'un éventuel service serveur de disque dur sur le réseau. Cette gestion permet que les données écrites soient stockées, selon le paramétrage desdits pilotes de périphériques et/ou dudit service serveur de disque dur sur le réseau :
■ ou bien directement dans le support contenant le disque dur émulé,
■ ou bien dans la mémoire, vive ou virtuelle, accessible au système d'exploitation utilisant le disque dur émulé,
■ ou bien dans un espace de stockage volatil accessible au système d'exploitation utilisant le disque dur émulé,
■ ou bien dans un espace de stockage non volatil accessible au système d'exploitation utilisant le disque dur émulé,
■ ou bien dans un espace de stockage volatil accessible au service serveur de disques durs émulés sur un réseau informatique,
■ ou bien dans un espace de stockage non volatil accessible au service serveur de disques durs émulés sur un réseau informatique.

Une gestion des requêtes de lecture que le système d'exploitation émet vers le disque dur émulé est effectuée au niveau des pilotes de périphériques et/ou au niveau d'un éventuel service serveur de disque dur sur le réseau de façon à ce que, pour un poste client, les lectures des données écrites précédemment soient effectuées dans l'espace de stockage idoine, c'est à dire :
■ ou bien directement dans le support contenant le disque dur émulé,
■ ou bien dans la mémoire, vive ou virtuelle, accessible au système d'exploitation utilisant le disque dur émulé,
■ ou bien dans un espace de stockage volatil accessible au système d'exploitation utilisant le disque dur émulé,
■ ou bien dans un espace de stockage non volatil accessible au système d'exploitation utilisant le disque dur émulé,
■ ou bien dans un espace de stockage volatil accessible au service serveur de disques durs émulés sur un réseau informatique,
■ ou bien dans un espace de stockage non volatil accessible au service serveur de disques durs émulés sur un réseau informatique.

Dans le cas où les données du ou des disque(s) dur(s) émulé(s) sont accessibles aux postes clients via un réseau informatique, un programme spécifique, appelé « logiciel serveur », est en charge, sur un des postes du réseau informatique, d'une part des communications via le réseau avec les postes clients qui accèdent aux disques durs émulés, et d'autre part d'accéder au support des données contenant les données des disques durs émulés.

Si le disque dur émulé doit être amorcé, un module micro logiciel bas niveau est responsable de l'accès aux données contenues dans le disque dur émulé. Ledit module logiciel fournit une interface de type micro logiciel (BIOS par exemple) afin de permettre la bonne exécution des fonctions de chargement des composants du système d'exploitation chargés traditionnellement par le micro logiciel lors de l'amorçage du système d'exploitation depuis un disque dur réel.

Ce micro logiciel pourra, dans le cas d'ordinateurs de type compatible PC, utiliser un gestionnaire d'interruption 13h fournissant au système d'exploitation l'interface utilisée par ce dernier.

Le micro logiciel pourra, dans le cas d'ordinateurs utilisant des programmes mémoires de démarrage de type "PXE" (PROM de démarrage PXE), utiliser les fonctions rendues disponibles par ces "PROMS" pour gérer les communications via le réseau informatique de façon indépendante du modèle d'interface réseau utilisée.

Le micro logiciel bas niveau est chargé dans la mémoire du poste client puis exécuté en utilisant les fonctions rendues disponibles par une "PROM" de démarrage comme une puce d'amorçage "PXE" par exemple.

Le micro logiciel bas niveau peut également être chargé dans la mémoire du poste client puis exécuté en tant que composant du micro logiciel basique (BIOS par exemple) du poste client. En particulier, ledit micro logiciel bas niveau fournit les mêmes fonctions que les services d'accès aux véritables disques durs fournis habituellement par le micro logiciel basique standard. Par exemple, dans le cas où les données contenues dans le disque dur émulé sont stockées sur un disque optique comme un CD ou un DVD, le micro logiciel bas niveau pourra être fourni par le constructeur du poste client en tant que partie du BIOS fournissant les fonctions d'amorçage BIOS depuis un disque optique.

Le micro logiciel bas niveau peut enfin être chargé dans la mémoire du poste client depuis un support de données tiers supporté en tant que périphérique d'amorçage par le poste client, comme une disquette, un disque dur réel ou un disque optique, puis exécuté par le poste client.

A noter que si certaines des données contenues dans le disque dur émulé sont accédées par un poste client via un réseau informatique, au moins un pilote de périphérique, chargé et exécuté par le système d'exploitation du poste client, fournit les fonctions de communication via le réseau informatique avec le logiciel serveur, lequel est chargé de fournir les services d'émulation du disque dur.

Si le support de données contenant les données du ou des disque(s) dur(s) émulé(s) est un support ne supportant pas les écritures en temps réel, par exemple un disque optique CD-ROM, ou que le système d'émulation de disque dur selon l'invention est paramétré pour ne pas accepter les écritures de données directement dans le support contenant les données du disque dur émulé, par exemple, un disque dur émulé utilisé simultanément par plusieurs postes clients, les pilotes de périphériques et/ou un logiciel serveur exécuté par un poste d'un réseau informatique fournissant l'émulation de disque dur aux postes clients peuvent traiter les requêtes d'écritures de données émises par le système d'exploitation vers le(s) disque(s) dur(s) émulé(s) de façon à ce que les données écrites soient stockées dans un espace de stockage différent du support de données contenant les données du ou des disque(s) dur(s) émulé(s).

Par exemple, les requêtes d'écritures de données émises par le système d'exploitation du poste client vers le(s) disque(s) dur(s) émulé(s) sont traitées de façon à ce que les données écrites soient stockées dans la mémoire vive du poste client.

Les requêtes d'écritures de données émises par le système d'exploitation du poste client vers le(s) disque(s) dur(s) émulé(s) peuvent être, soit traitées de façon à ce que les données écrites soient stockées dans la mémoire virtuelle du poste client, c'est à dire dans un fichier de données, accessible au système d'exploitation du poste client, et servant d'espace mémoire additionnel, soit traitées de façon à ce que les données écrites soient stockées dans un fichier de données, accessible au système d'exploitation du poste client.

Les requêtes d'écriture de données émises par le système d'exploitation vers le(s) disque(s) dur(s) émulé(s) sont, à un instant donné, redirigées dans un et un seul espace de stockage. L'espace de stockage dans lequel sont redirigées les écritures, peut être changé à la volée durant une session d'exécution du système d'exploitation d'un poste client. L'espace de stockage utilisé pour le stockage des écritures peut être volatil, c'est à dire être vidé des données qui y sont stockées à chaque nouvelle session d'exécution du système d'exploitation d'un poste client, ou bien non volatil de façon à permettre la persistance des données écrites d'une session d'exécution du système d'exploitation d'un poste client à une autre. La volatilité ou la persistance de l'espace de stockage utilisé pour le stockage des écritures est paramétrable quand cela a du sens. Le caractère volatil des redirections d'écriture est déterminé à l'initialisation de la session d'exécution du système d'exploitation d'un poste client et, s'il est modifié à la volée, il n'aura d'effet pour le poste client qu'après un démarrage ou un redémarrage de ce dernier.

Les requêtes de lecture de données émises par le système d'exploitation peuvent être effectuées dans différents espaces de stockage lors d'une session d' exécution du système d'exploitation. Dans ce cas, les requêtes de lecture de données émises par le système d'exploitation vers un disque dur émulé, effectuées dans différents espaces de stockage, le sont en suivant un ordre de priorité qui découle de l'ordre précédent des différentes redirections des requêtes d'écriture.

Lesdits ordres de priorité dépendent de la séquence précédemment effectuée pour les redirections des requêtes d'écriture. On s'assure ainsi que, du point de vue du poste client, le disque dur émulé est toujours cohérent ; en particulier, si une donnée particulière D1 (un secteur d'un disque dur émulé ou un fichier d'un système de fichier) a été écrite dans un espace de données E1 à un moment donné, puis que les requêtes d'écriture ont été redirigées dans un autre espace E2, puis que la même donnée D1 (le même secteur ou le même fichier) a été modifiée et subséquemment écrite dans l'espace E2, les requêtes de lectures sur D1 se feront dans l'espace E2 (qui a la plus grande priorité), de façon à lire la version de D1 la plus récemment écrite.

Par exemple :
1. Les données à lire se trouvent-elles dans la mémoire vive ou virtuelle du poste client, à cause de précédentes requêtes d'écriture redirigées dans cet espace de stockage ? Si oui les y lire, si non,
2. Les données à lire se trouvent-elles dans un espace de stockage tampon (un fichier par exemple) accessible aux pilotes de périphériques qui sont parties de l'invention du poste client, à cause de précédentes requêtes d'écriture redirigées dans cet espace de stockage ? Si oui les y lire, si non,
3. Les données du disque dur émulé sont elles stockées sur un serveur dans un réseau informatique ? si oui traiter le point 4, si non traiter le point 5,
4. Les données à lire se trouvent-elle dans un espace de stockage tampon (un fichier par exemple) accessible d'un module serveur, à cause de précédentes requêtes d'écriture redirigées dans cet espace de stockage ? Si oui les y lire, si non,
5. Lire les données directement dans le support contenant les données non modifiées du disque dur émulé.

Avantageusement, si le système d'émulation de disque dur est paramétré de façon à ce que les requêtes d'écritures reçues par le logiciel serveur à destination d'un disque dur émulé particulier ne sont pas redirigées mais stockées directement dans support contenant les données du disque dur émulé lui-même, un seul poste client peut accéder audit disque dur émulé à un instant donné.

On évite ainsi les problèmes d'accès concurrent « en écriture » à un même ensemble de données.

Le paramétrage pour lequel les requêtes d'écritures ne sont pas redirigés est, par exemple, le paramétrage à utiliser pour mettre à disposition des postes clients, un nouveau composant logiciel (un nouvel applicatif logiciel par exemple) :
- Le paramétrage d'accès au disque dur émulé est positionné de façon à ce que les requêtes d'écritures ne soient pas redirigées,
- Le composant nouveau logiciel est installé comme s'il était installé sur un disque dur réel,
- Le poste client depuis lequel l'installation a été effectuée est éteint,
- Le paramétrage d'accès au disque dur émulé est modifié de façon à ce que les requêtes d'écriture émanant des postes clients soient redirigées,
- Tous les postes client qui utilisent le disque dur émulé en question ont désormais accès au nouveau composant logiciel sans qu'il ait été nécessaire de le mettre explicitement à la disposition de chaque poste client.

Pour permettre à plusieurs postes clients l'accès simultané à un même disque dur émulé, le logiciel serveur est capable de rediriger spécifiquement les requêtes d'écriture émises par un poste client A dans un espace de stockage donné, par exemple un fichier dans l'espace de stockage accessible au poste serveur, et de rediriger les requêtes d'écriture émises par un autre poste client B dans un autre espace de stockage donné, par exemple un autre fichier dans l'espace de stockage accessible au poste serveur.

Afin d'accélérer l'accès simultané par plusieurs postes client au même disque dur émulé dont les données sont contenues dans un support de données accessible au poste serveur, les données envoyées par le poste serveur aux postes clients dans le cadre de l'émulation de disque dur peuvent être envoyées globalement et en une seule fois en utilisant des mécanismes de "broadcast" ou de "multicast" au lieu de mécanismes dits "unicast".

Les données envoyées en "broadcast" ou en "multicast" par le poste serveur sont stockées par les postes clients qui les acceptent dans un cache local, situé dans la mémoire (réelle ou virtuelle) desdits postes clients.

Avantageusement, les postes clients peuvent effacer du cache les données qui y sont depuis plus d'un temps donné et paramétrable (TimeOut). En effet, ces données pourraient, si elles ne sont pas pertinentes et si elles ne sont jamais lues, engorger inutilement le cache "multicast" des postes clients.

Une requête de lecture de données dans le disque dur émulé émise par le système d'exploitation d'un poste client génère une demande explicite de lecture émise vers le poste serveur uniquement si lesdites données ne sont pas déjà présentes dans ledit cache local. Si lesdites données sont effectivement déjà présentes dans ledit cache local, elles y sont lues et transmises au système d'exploitation du poste client.

Les données lues dans le cache local en sont retirées dès qu'elles sont lues par le poste client, de façon à libérer de la place dans ledit cache local.

La décision d'envoyer, dans le cadre de l'émulation de disques durs selon l'invention, des données en "multicast/broadcast" ou en "unicast" est effectuée au niveau du module serveur qui fournit les fonctionnalités nécessaires à l'émulation de disques durs aux postes clients.

Les postes clients peuvent modifier leur souscription à la réception de données envoyées via "broadcast/multicast" par le poste serveur dans le cadre de l'émulation de disques durs selon l'invention. Par exemple, les postes clients, une fois qu'ils ont été amorcés depuis un disque dur émulé et que l'interface homme/machine permettant à un ou plusieurs utilisateurs d'exploiter le poste client est utilisable, la souscription à la réception de données via "broadcast/multicast" peut être résiliée, par exemple par un mécanisme de désabonnement à un groupe d'adresses "multicast", de façon à ce que les postes clients complètement amorcés n'aient plus à traiter les flots de données "multicast/broadcast" ; cela peut s'avérer très utile si les données envoyées par le poste serveur via "multicast/broadcast" ne sont destinées qu'à permettre l'accès aux portions du disque système émulé nécessaire à l'amorçage complet du système d'exploitation du poste client, et plus du tout utile aux postes clients déjà amorcés. Ainsi, un poste client déjà amorcé depuis un disque dur émulé n'est pas pollué par les données envoyées en "broadcast/multicast" à des postes clients en cours d'amorçage.

Selon l'invention, afin de permettre l'amorçage depuis et/ou des accès simultanés au même disque dur émulé ou à des copies 100% identiques d'un même disque dur émulé, certains composants constituant l'invention chargés et exécutés par les postes clients, par exemple un ou plusieurs pilotes de périphériques, ou par un logiciel serveur, sont capables de modifier, à la volée ou avant leur utilisation effective par le système d'exploitation, certaines données contenues dans le disque dur émulé, par exemple l'identifiant unique d'un poste client sur le réseau (nom d'ordinateur ou adresse "IP" par exemple) ou le mot de passe du compte du poste client dans un domaine d'authentification (domaine "active directory" par exemple), des numéros de séries de logiciels, ou encore des données d'authentification telles que les données nécessaires à l'activation de certains produits "Microsoft".

L'émulation elle-même peut être effectuée, pour le système d'exploitation du poste client, au niveau de la classe de périphériques virtuels de type système de fichier (file system), comme dans les produits "Qualystem LiteNET PC 1.x et Qualystem LAN PC 2.x" (file system CIFS ou SMB) ou "Qualystem Rescue 1.x" (file system IS09660/Joliet, CDFS ou UDF).

L'émulation peut être également effectuée, pour le système d'exploitation du poste client, au niveau de la classe de périphériques di sques elle-même et non pas au niveau du système de fichier. Ce type d'émulation est mis en oeuvre par exemple dans les produits "Qualystem LAN PC 3.x" (Support de données des disques durs émulés résidant sur un serveur d'un réseau informatique) ou "Qualystem Rescue 2.x et 3.x" (Support de données des disques durs émulés résidant dans la partie d'amorçage, dite "E1 Torito", d'un disque optique, CD ou DVD).

Les données significatives contenues dans le disque dur émulé y sont copiées par un outil logiciel exécuté sur un poste de référence depuis un disque dur réel dit disque dur de référence, accessible au système d'exploitation dudit poste de référence.

L'outil logiciel crée un fichier ou un répertoire image (fichier image pour l'émulation au niveau disque dur, répertoire image pour l'émulation au niveau du système de fichier) qui contient les données du disque dur émulé. Ledit fichier image ou répertoire image est créé en effectuant une copie de chaque fichier contenu dans le disque dur réel, utilisé comme référence pour créer le fichier image ou le répertoire image.

Dans le cas du fichier image, ce dernier est une représentation bit à bit d'un véritable disque dur considéré comme un tableau de bits. C'est la représentation logique d'un disque dur sous forme de tableau de bits qui est utilisée. Le fichier image contient ainsi les informations nécessaires à la représentation de la structure logique d'un véritable disque dur, comme le secteur de "BOOT" primaire (MBR, Master Boot Record) et la table des partitions. Il contient aussi le ou les secteurs d'amorçage des partitions contenues dans le disque dur émulé. Le logiciel qui crée le fichier image à partir d'un disque dur réel peut être amené, si le disque dur émulé doit être amorcé, à modifier dans les données stockées dans le fichier image, certaines des informations utilisées par le système d'exploitation chargé depuis le disque dur émulé, afin de rendre opérationnel et effectif l'amorçage dudit système d'exploitation depuis ledit disque dur émulé.

Afin de permettre l'amorçage depuis un disque dur émulé, la séquence de chargement des composants du système d'exploitation peut nécessiter une adaptation de façon à ce que tous les composants du système d'exploitation dont dépendent les pilotes de périphérique permettant l'accès au disque dur émulé selon l'invention soient chargés et utilisables au moment ou le système d'exploitation a besoin d'accéder au disque dur émulé en utilisant les pilotes de périphériques et non plus en utilisant les fonctions du "firmware" (BIOS).

Par exemple, si les données contenues dans le disque dur émulé utilisé pour l'amorçage du système d'exploitation d'un micro ordinateur sont stockées dans un fichier sur un serveur d'un réseau informatique, les pilotes permettant au système d'exploitation du poste client d'utiliser à l'interface réseau dudit poste client doivent être chargés et utilisables avant que le système d'exploitation n'ait besoin d'accéder au disque dur émulé via les pilotes de périphérique, pour continuer son chargement ; de même, à ce moment, les pilotes des protocoles réseau utilisés par les pilote s de périphériques permettant d'accéder au disque dur émulé devront être chargés et utilisables.

Un autre exemple est celui où les données contenues dans le disque dur émulé utilisé pour l'amorçage du système d'exploitation d'un micro ordinateur sont stockées dans la partie d'amorçage d'un disque optique (CD ou DVD). Dans un tel cas, les pilotes de périphériques permettant au système d'exploitation d'accéder audit lecteur de disque optique doivent être chargés et utilisables avant que le système d'exploitation ait besoin d'accéder au disque dur émulé, via les pilotes de périphérique, pour continuer son changement.

Il se peut donc que l'ordre de chargement des composants dont dépendent les pilotes de périphériques permettant d'accéder au disque dur émulé doive être adapté.

Dans le cas où les données d'un disque dur émulé sont accédées par un client via un réseau informatique, le(s) éventuel(s) module(s) serveur peut(peuvent) mettre à disposition sur le réseau des disques durs émulés en utilisant un protocole propriétaire, comme celui utilisé actuellement dans "Qualystem LAN PC 3" ou en utilisant un protocole tiers idoine, par exemple un protocole 'standard' afin d'exporter des disques durs ou des systèmes de fichiers distants, par exemple le protocole "iSCSI" (disque dur distant) ou les protocoles "SMB/CIFS" ou "NFS" (systèmes de fichiers distants). L'éventuel module serveur est alors un service auquel les clients qui « parlent » le protocole utilisé peuvent se connecter et ainsi accéder aux ressources de données mises à disposition par ledit service. Il existe bien sûr la possibilité, au niveau dudit service, de gérer les écritures de façon paramétrable, et de pouvoir, en particulier, les effectuer dans un espace de stockage spécifique au couple poste client/disque dur virtuel, espace de stockage qui n'est pas l'espace de stockage commun à tous les clients. Les clients qui peuvent se connecter aux disques durs émulés mis à disposition par le module serveur sur le réseau peuvent ainsi être des clients "standard", par exemple des clients "iSCSI" standard, ou des clients "SMB/CIFS" standards, et non pas forcément de s clients "Qualystem™ LAN-PC 3 ", par exemple. De même, les programmes exécutés par les postes clients, module logiciel bas niveau ou pilotes de périphériques, peuvent utiliser, pour accéder aux données contenues dans les disques durs émulés, un protocole réseau propriétaire, tel le protocole "NVD" de "Qualystem LAN PC 3", ou un protocole tiers, par exemple standard tel "iSCSI" ou "SMB/CIFS".

Selon que l'implémentation, au niveau des modules serveurs ou clients, implémente les fonctions de la présente invention, la redirection des requêtes d'écriture pourra alors être effective ou bien au niveau des modules clients, ou bien au niveau des modules serveurs, ou bien pour ces deux types de modules, avec les avantages décrits précédemment.

Ainsi, la sécurisation de l'accès au système d'exploitation et/ou à certains fichiers contenus dans le disque dur, et notamment dans un système en réseau exploité par de nombreux utilisateurs, est assurée grâce au procédé selon l'invention, qui met en oeuvre une émulation logicielle totale des disques durs au niveau des blocs de données ou du système fichier, permettant ainsi d'utiliser dans des disques durs émulés tout type de systèmes de fichiers acceptés par le système d'exploitation.

## Revendications

1. Procédé pour l'émulation logicielle de disques durs d'une plate-forme informatique au niveau du système d'exploitation, avec gestion paramétrable à la volée des requêtes d'écriture et de lecture,
le procédé consiste à créer dans une première étape une représentation d'un disque dur réel dans laquelle peuvent être adaptés Les ordres de chargement et d'exécution de certains des composants du système d'exploitation de la plate-forme informatique, puis de charger sur ladite plate-forme informatique au cours d'une deuxième étape un ou plusieurs pilotes de périphérique parmi lesquels au moins un des pilotes de périphérique permet le dialogue réel avec un support de stockage de données contenant les données du disque dur émulé, puis à simuler dans une troisième étape le comportement d'un véritable disque dur pour le système d'exploitation.
**caractérisé en ce que** si le support de données contenant les données du ou des disque(s) dur(s) émulé(s) est un support ne supportant pas les écritures en temps réel, ou que le système d'émulation de disque dur est paramétré pour ne pas accepter les écritures de données directement dans le support contenant les données du disque dur émulé, les requêtes d'écritures de données émises par le système d'exploitation vers le(s) disque(s) dur(s) émulé(s) sont traitées de façon à ce que les données écrites soient stockées dans un espace de stockage différent du support de données contenant les données du ou des disque(s) dur(s) émulé(s).

2. Procédé selon la revendication 1,
**caractérisé en ce que** la gestion des susdites requêtes d'écriture que le système d'exploitation émet vers le disque dur émulé est effectuée au niveau des pilotes de périphériques et/ou au niveau d'un éventuel service serveur de disque dur sur le réseau, les données écrites étant stockées, selon le paramétrage desdits pilotes de périphériques et/ou dudit service serveur de disque dur sur le réseau :
■ ou bien dans la mémoire, vive ou virtuelle, accessible au système d'exploitation utilisant le disque dur émulé,
■ ou bien dans un espace de stockage volatil accessible au système d'exploitation utilisant le disque dur émulé,
■ ou bien dans un espace de stockage non volatil accessible au système d'exploitation utilisant le disque dur émulé,
■ ou bien dans un espace de stockage volatil accessible au service serveur de disques durs émulés sur un réseau informatique,
■ ou bien dans un espace de stockage non volatil accessible au service serveur de disques durs émulés sur un réseau informatique.

3. Procédé selon la revendication 1,
**caractérisé en ce que** la gestion des susdites requêtes de lecture que le système d'exploitation émet vers le disque dur émulé est effectuée au niveau des pilotes de périphériques et/ou au niveau d'un éventuel service serveur de disque dur sur le réseau, les lectures des données écrites précédemment étant effectuées dans un espace de stockage :
■ ou bien directement dans le support contenant le disque dur émulé,
■ ou bien dans la mémoire, vive ou virtuelle, accessible au système d'exploitation utilisant le disque dur émulé,
■ ou bien dans un espace de stockage volatil accessible au système d'exploitation utilisant le disque dur émulé,
■ ou bien dans un espace de stockage non volatil accessible au système d'exploitation utilisant le disque dur émulé,
■ ou bien dans un espace de stockage volatil accessible au service serveur de disques durs émulés sur un réseau informatique,
■ ou bien dans un espace de stockage non volatil accessible au service serveur de disques durs émulés sur un réseau informatique.

4. Procédé selon la revendication 1,
**caractérisé en ce que** l'émulation de disque dur fournie au système d'exploitation d'un poste client peut être effectuée par le biais d'un seul pilote de périphérique monolithique, qui communique avec le système d'exploitation à la façon d'un disque dur et qui communique avec le support contenant les données dudit disque dur émulé de manière spécifique à ce support.

5. Procédé selon la revendication 1,
**caractérisé en ce que** les données du ou des disque(s) dur(s) émulé(s) sont accessibles aux postes clients via un réseau informatique.

6. Procédé selon la revendication 1,
**caractérisé en ce que** si un disque dur émulé doit être amorcé, un module micro logiciel bas niveau est responsable de l'accès aux données contenues dans ledit disque dur émulé, en fournissant une interface de type de celle fournie par le micro logiciel chargé de l'accès aux données de véritables disques durs par le système d'exploitation amorcé sur le poste client.

7. Procédé selon les revendications 5 et 6,
**caractérisé en ce que** le micro logiciel pourra, dans le cas d'ordinateurs utilisant des programmes mémoires PROM de démarrage de type "PXE" , utiliser les fonctions rendues disponibles par ces "PROMS" pour gérer les communications via le réseau informatique de façon indépendante du modèle d'interface réseau utilisée.

8. Procédé selon la revendication 7,
**caractérisé en ce que** le micro logiciel bas niveau est chargé dans la mémoire du poste client puis exécuté en utilisant les fonctions rendues disponibles par une "PROM" de démarrage.

9. Procédé selon la revendication 6,
**caractérisé en ce que** le micro logiciel bas niveau est chargé dans la mémoire du poste client puis exécuté en tant que composant du micro logiciel basique standard du poste client, ledit micro logiciel bas niveau fournissant les mêmes fonctions que les services d'accès aux véritables disques durs fournis habituellement par le micro logiciel basique standard

10. Procédé selon la revendication 6,
**caractérisé en ce que** le micro logiciel bas niveau est chargé dans la mémoire du poste client depuis un support de données tiers supporté en tant que périphérique d'amorçage par le poste client.

11. Procédé selon la revendication 5,
**caractérisé en ce qu'**au moins un pilote de périphérique chargé et exécuté par le système d'exploitation du poste client fournit les fonctions d'accès, via le réseau informatique, aux données contenues dans les disques durs émulés.

12. Procédé selon la revendication 1,
**caractérisé en ce que** les requêtes d'écritures de données émises par le système d'exploitation du poste client vers le(s) disque(s) dur(s) émulé(s) sont traitées de façon à ce que les données écrites soient stockées dans la mémoire vive du poste client.

13. Procédé selon la revendication 1,
**caractérisé en ce que** les requêtes d'écritures de données émises par le système d'exploitation du poste client vers le(s) disque(s) dur(s) émulé(s) sont traitées de façon à ce que les données écrites soient stockées dans la mémoire virtuelle du poste client.

14. Procédé selon la revendication 1,
**caractérisé en ce que** les requêtes d'écriture de données émises par le système d'exploitation du poste client vers le(s) disque(s) dur(s) émulé(s) sont traitées de façon à ce que les données écrites soient stockées dans un fichier de données, accessible au système d'exploitation du poste client.

15. Procédé selon la revendication 1,
**caractérisé en ce que** les requêtes d'écriture de données émises par le système d'exploitation vers le(s) disque(s) dur(s) émulé(s) sont, à un instant donné, redirigées dans un et un seul espace de stockage ; l'espace de stockage dans lequel sont redirigées les écritures peut être changé à la volée durant une session d'exécution du système d'exploitation d'un poste client.

16. Procédé selon la revendication 1,
**caractérisé en ce que** l'espace de stockage utilisé pour le stockage des écritures peut être volatil, c'est à dire être vidé des données qui y sont stockées à chaque nouvelle session d'exécution du système d'exploitation d'un poste client, ou bien non volatil de façon à permettre la persistance des données écrites d'une session d'exécution du système d'exploitation d'un poste client à une autre.

17. Procédé selon les revendications 15 et 16,
**caractérisé en ce que** le caractère volatil des redirections d'écriture est déterminé à l'initialisation de la session d'exécution du système d'exploitation d'un poste client

18. Procédé selon la revendication 1,
**caractérisé.en ce que** les requêtes de lecture de données émises par le système d'exploitation peuvent être effectuées dans différents espaces de stockage lors d'une session d'exécution du système d'exploitation d'un poste client.

19. Procédé selon la revendication 18,
**caractérisé en ce que** les requêtes de lecture de données émises par le système d'exploitation vers un disque dur émulé, effectuées dans différents espaces de stockage, le sont en suivant un ordre de priorité.

20. Procédé selon la revendication 5,
**caractérisé en ce qu'**un programme spécifique, appelé « logiciel serveur », est en charge, sur un des postes du réseau informatique, d'une part des communications via le réseau avec les postes clients qui accèdent aux disques durs émulés, et d'autre part d'accéder au support de données contenant les données des disques durs émulés.

21. Procédé selon la revendication 20,
**caractérisé en ce que** pour permettre à plusieurs postes clients l'accès simultané à un même disque dur émulé, le logiciel serveur est capable de rediriger spécifiquement les requêtes d'écriture émises par un poste client A dans un espace de stockage donné, et de rediriger les requêtes d'écriture émises par un autre poste client B dans un autre espace de stockage donné.

22. Procédé selon la revendication 1,
**caractérisé en ce qu'**afin de permettre l'amorçage depuis et/ou des accès simultanés au même disque dur émulé ou à des copies 100% identiques d'un même disque dur émulé, certains composants chargés
et exécutés par les postes clients ou par un logiciel serveur, sont capables de modifier, à la volée ou avant leur utilisation effective par le système d'exploitation, certaines données contenues dans le disque dur émulé.

23. Procédé selon la revendication 1,
**caractérisé en ce que** l'émulation elle même est effectuée, pour le système d'exploitation du poste client, au niveau de la classe de périphériques virtuels de type système de fichier.

24. Procédé selon la revendication 1,
**caractérisé en ce que** l'émulation est effectuée, pour le système d'exploitation du poste client, au niveau de la classe de périphériques disques elle-même et 5 non pas au niveau du système de fichier.

25. Procédé selon la revendication 1,
**caractérisé en ce que** les données significatives contenues dans le disque dur émulé y sont copiées par un outil logiciel exécuté sur un poste de référence depuis un disque dur réel dit disque dur de référence, accessible au système d'exploitation dudit poste de référence.

26. Procédé selon les revendications 23 et 25,
**caractérisé en ce que** l'outil logiciel crée un répertoire image qui contient les données du disque dur émulé.

27. Procédé selon les revendications 24 et 25,
**caractérisé en ce que** l'outil logiciel crée un fichier image qui contient les données du disque dur émulé.

28. Procédé selon la revendication 1,
**caractérisé en ce qu'**afin de permettre l'amorçage depuis un disque dur émulé, la séquence de chargement des composants du système d'exploitation nécessite une adaptation de façon à ce que tous les composants du système d'exploitation dont dépendent les pilotes de périphérique permettant l'accès au disque dur émulé soient chargés et utilisables au moment où le système d'exploitation a besoin d'accéder au disque dur émulé en utilisant les pilotes de périphériques et non plus en utilisant les fonctions du "firmware" .

29. Procédé selon la revendication 20,
**caractérisé en ce que** pour accélérer l'accès simultané par plusieurs postes client au même disque dur émulé dont les données sont contenues dans un support de données accessible au poste serveur, les données sont envoyées par le logiciel serveur aux postes clients dans le cadre de l'émulation de disque dur, globalement et en une seule fois en utilisant des mécanismes de "broadcast" ou de "multicast" au lieu de mécanismes dit "unicast".

30. Procédé selon la revendication 29,
**caractérisé en ce que** les données envoyées en "broadcast" ou "multicast" par le poste serveur sont stockées par les postes clients qui les acceptent dans un cache local, situé dans la mémoire desdits postes clients.

31. Procédé selon la revendication 29,
**caractérisé en ce qu'**une requête de lecture de données dans le disque dur émulé émise par le système d'exploitation d'un poste client génère une
demande explicite de lecture émise vers le poste serveur uniquement si lesdites données ne sont pas déjà présentes dans ledit cache local.

32. Procédé selon la revendication 31,
**caractérisé en ce que** les données lues dans le cache local en sont retirées dès qu'elle sont lues par le poste client, de façon à libérer de la place dans ledit cache local.

33. Procédé selon la revendication 29,
**caractérisé en ce que** la décision d'envoyer, dans le cadre de l'émulation de disques durs selon l'invention, des données en "multicast/broadcast" ou en "unicast" est effectuée au niveau du logiciel serveur qui fournit les fonctionnalités nécessaires à l'émulation de disques durs aux postes clients.

34. Procédé selon la revendication 29,
**caractérisé en ce que** les postes clients peuvent modifier leur souscription à la réception de données envoyées via "broadcast/multicast" par le poste serveur dans le cadre de l'émulation de disques durs.

35. Procédé selon la revendication 30,
**caractérisé en ce que** les postes clients peuvent effacer du cache local, les données qui y sont depuis plus d'un temps donné et paramétrable.

36. Procédé selon la revendication 5,
**caractérisé en ce que** le module serveur mettant à disposition des postes clients les données contenues dans les disques durs émulés peut utiliser n'importe quel protocole réseau idoine.

37. "Procédé selon les revendications 5 et 6,
**caractérisé en ce que** le programme logiciel bas niveau, exécuté par les postes clients et permettant l'accès aux données contenues dans les disques durs émulés peut utiliser n'importe quel protocole réseau idoine.

38. Procédé selon la revendication 11,
**caractérisé en ce que** le(s) pilote(s) de périphérique selon l'invention exécuté(s) par les postes clients et permettant l'accès aux données contenues dans les disques durs émulés peuvent utiliser n'importe quel protocole réseau idoine.

39. Procédé selon la revendication 20,
**caractérisé en ce que** les requêtes d'écritures de données émises par le système d'exploitation des postes clients vers le(s) disque(s) dur(s) émulé(s) sont traitées de façon à ce que les données écrites soient stockées dans la mémoire vive du poste serveur.

40. Procédé selon la revendication 20,
**caractérisé en ce que** les requêtes d'écritures de données émises par le système d'exploitation des postes clients vers le(s) disque(s) dur(s) émulé(s) sont traitées de façon à ce que les données écrites soient stockées dans la mémoire virtuelle du poste serveur.

41. Procédé selon la revendication 20,
**caractérisé en ce que** les requêtes d'écriture de données émises par le système d'exploitation des postes clients vers le(s) disque(s) dur(s) émulé(s) sont traitées de façon à ce que les données écrites soient stockées dans un fichier de données, accessible au logiciel serveur.

42. Procédé selon la revendication 20,
**caractérisé en ce que** l'espace de stockage utilisé pour le stockage des écritures peut être volatil, c'est à dire être vidé des données qui y sont stockées à chaque nouvelle session d'exécution du système d'exploitation d'un poste client, ou bien non volatil de façon à permettre la persistance des données écrites d'une session d'exécution du système d'exploitation d'un poste client à une autre.

43. Procédé selon les revendications 15 et 20,
**caractérisé en ce que** le caractère volatil des redirections d'écriture est déterminé à l'initialisation de la session d'exécution du système d'exploitation d'un poste client

## Claims

1. Method for software emulation of hard disks of a data processing platform at the level of the operating system with parameterizable management on the fly of requests for writing and reading data,
the method consists of creating in a first step a representation of a real hard disk in which the orders of loading and execution of certain components of the operating system of a data processing platform may be modified, then in a second step loading on said data processing platform one or more peripheral drivers, among which at least one of the peripheral drivers permits real dialogue with a data storage support containing the data of the emulated hard disk, then simulating in a third step the behavior of a real hard disk for the operating system,
**characterized in that**
if the data support containing the data of the emulated hard disk(s) is a support that does not support writing in real time, or the system of hard disk emulation is parameterized not to accept the writing of data directly in the support containing the data of the emulated hard disk, the data writing requests issued by the operating system to the emulated hard disk(s) are treated in such a way that the written data are stored in a storage space different from the data support containing the data of the emulated hard disk(s).

2. Method as claimed in claim 1,
**characterized in that** the management of said data write requests that the operating system sends to the emulated hard disk is accomplished at the peripheral driver level and/or at the level of an optional hard disk server service on the network, the written data being stored, according to the parameterization of said peripheral drivers and/or said service server of the hard disk on the network:
• either in the memory, random access or virtual, accessible to the operating system using the emulated hard disk,
• or else in a volatile storage space accessible to the operating system using the emulated hard disk,
• or in a non-volatile storage space accessible to the operating system using the emulated hard disk,
• or in a volatile storage space accessible to the server service of emulated hard disks on a data processing network,
• or in a non-volatile storage space accessible to the server service of emulated hard disks on a data processing network.

3. Method as claimed in claim 1,
**characterized in that** the management of the data reading requests that the operating system issues to the emulated hard disk is accomplished at the peripheral driver level and/or at the level of an optional hard disk server service on the network, the readings of previously written data being performed in the storage space:
• either directly in the support containing the emulated hard disk,
• or in the random access or virtual memory accessible to the operating system using the emulated hard disk,
• or in a volatile storage space accessible to the operating system using the emulated hard disk,
• or in a nonvolatile storage space accessible to the operating system using the emulated hard disk,
• or in a volatile storage space accessible to the server service of emulated hard disks on a data processing network,
• or in a non-volatile storage space accessible to the server service of emulated hard disks on a data processing network.

4. Method as claimed in claim 1,
**characterized in that** the emulation of the hard disk provided to the operating system of a client station is accomplished by the agency of a single, monolithic peripheral driver which communicates with the operating system in the manner of a hard disk and which communicates with the support containing the data of said emulated hard disk in a manner specific to this support.

5. Method as claimed in claim 1,
**characterized in that** the data of the emulated hard disk or disks are accessible to the client stations via a data processing network.

6. Method as claimed in claim 1,
**characterized in that** if an emulated hard disk is to be started up, a low level micro-software module is responsible for access to the data contained in said emulated hard disk by providing an interface of the type of that provided by the micro-software having access to the data of real hard disks by the operating system started up at the client station.

7. Method as claimed in claims 5 and 6,
**characterized in that** the micro-software could, in the case of computers using bootup PROM memory programs of the PXE type, use the functions made available by these PROMS for controlling communications via the data processing network independently of the network interface model employed.

8. Method as claimed in claim 7,
**characterized in that** the low level micro-software is loaded in the memory of the client station and executed by using the functions made available by a bootup PROM.

9. Method as claimed in claim 6,
**characterized in that** the low level micro-software is loaded in the memory of the client station and executed as a component of the basic standard micro-software of the client station, said low level micro-software providing the same functions as the access services on real hard disks normally provided by the basic standard micro-software.

10. Method as claimed in claim 6,
**characterized in that** the low-level micro-software is loaded in the memory of the client station from a third party data support supported as a startup peripheral by the client station.

11. Method as claimed in claim 5,
**characterized in that** at least one peripheral driver loaded and executed by the operating system of the client station provides the functions of access, via the data processing network, to the data contained in the emulated hard disks.

12. Method as claimed in claim 1,
**characterized in that** the data writing requests issued by the client station operating system to the emulated hard disk(s) are processed in such a way that the written data are stored in the random access memory of the client station.

13. Method as claimed in claim 1,
**characterized in that** the data writing requests issued by the client station operating system to the emulated hard disk(s) are processed in such a way that the written data are stored in the virtual memory of the client station.

14. Method as claimed in claim 1,
**characterized in that** the data writing requests issued by the client station operating system to the emulated hard disk(s) are processed in such a way that the written data are stored in a data file accessible to the operating system of the client station.

15. Method as claimed in claim 1,
**characterized in that** the data writing requests issued by the operating system to the emulated hard disk(s) are, at a given moment, redirected to one and only one storage space; the storage space in which the written data are redirected may be changed on the fly during an operating session of the operating system of a client station.

16. Method as claimed in claim 1,
**characterized in that** the storage space used for storage of the written data may be volatile, i.e. be emptied of data that are stored in each new operating session of the client station operating system or nonvolatile so as to permit the written data of an operating session of the operating system to persist from one client station to another.

17. Method as claimed in claims 15 and 16,
**characterized in that** the volatile character of the redirections of the written data is determined upon initialization of the operating session of the operating system of a client station.

18. Method as claimed in claim 1,
**characterized in that** the data reading requests issued by the operating system may be performed in different storage spaces during an operating session of the operating system of a client station.

19. Method as claimed in claim 18,
**characterized in that** the data reading requests issued by the operating system to an emulated hard disk carried out in different storage spaces are following an order of priority.

20. Method as claimed in claim 5,
**characterized in that** a specific program called "server software" is in charge at one of the stations of the data processing network, on the one hand, of the communications via the network with the client stations accessing the emulated hard disks, and on the other, of accessing the data support containing the data of the emulated hard disks.

21. Method as claimed in claim 20,
**characterized in that** in order to permit several client stations to access an emulated hard disk simultaneously, the server software is capable of redirecting specifically the data write requests issued by a client station A to a given storage space, and of redirecting the data write requests issued by another client station B to another given storage space.

22. Method as claimed in claim 1,
**characterized in that** in order to permit the startup from and/or simultaneous access to the same emulated hard disk or 100% identical copies of the same emulated hard disk, certain components loaded and executed by the client stations or server software are capable of modifying, on the fly or before their effective use by the operating system, of certain data contained in the emulated hard disk.

23. Method as claimed in claim 1,
**characterized in that** the emulation itself is performed for the operating system of the client stations at the level of the class of virtual peripherals of the file system type.

24. Method as claimed in claim 1,
**characterized in that** the emulation is performed for the operating system of the client stations at the level of the class of disk peripherals itself and not at the file system level.

25. Method as claimed in claim 1,
**characterized in that** the significant data contained in the emulated hard disk and are copied by a software tool executed at a references station from a real hard disk called the reference hard disk that is accessible to the operating system of said reference station.

26. Method as claimed in claims 23 and 25,
**characterized in that** the software tool creates an image directory that contains the data of the emulated hard disk.

27. Method as claimed in claims 24 and 25,
**characterized in that** the software tool creates an image file that contains the data of the emulated hard disk.

28. Method as claimed in claim 1,
**characterized in that** in order to permit startup from an emulated hard disk, the sequence of loading of the components of the operating system requires an adjustment so that all components of the operating system on which the peripheral drivers permitting access to the emulated hard disk depend are loaded and usable at the moment when the operating system needs to access the emulated hard disk by using the peripheral drivers and no longer by using the firmware functions.

29. Method as claimed in claim 20,
**characterized in that** in order to accelerate the simultaneous access by several client stations to the same emulated hard disk whose data are contained in a data support accessible to the server station, the data are sent by the server station to the client stations within the scope of the hard disk emulation globally and at a single time by using the "broadcast" or "multicast" mechanisms instead of the "unicast" mechanism.

30. Method as claimed in claim 29,
**characterized in that** the data sent by "broadcast" or by "multicast" by the server station are stored by the client stations that accept them in a local cache situated in the memory of said client stations.

31. Method as claimed in claim 29,
**characterized in that** a reading request for data in the emulated hard disk issued by the operating system of a client station generates an explicit reading request sent to the server station only if said data are not already present in said local cache.

32. Method as claimed in claim 31,
**characterized in that** the data read in the local cache are removed after being read by the client station so as to free up space in said local cache.

33. Method as claimed in claim 29,
**characterized in that** the decision to send, within the scope of the hard disk emulation according to the invention, of data by "multicast/broadcast" or "unicast" is made at the server module level which provides the functionalities necessary for the hard disk emulation at the client stations.

34. Method as claimed in claim 29,
**characterized in that** the client stations may modify their subscription to receiving the data sent via "broadcast/multicast" by the server station within the scope of emulation of hard disks.

35. Method as claimed in claim 30,
**characterized in that** the client stations may erase the data from the local cache after a certain parameterizable time.

36. Method as claimed in claim 5,
**characterized in that** the server module making the data contained in the emulated hard disks available to client stations may use any suitable network protocol.

37. Method as claimed in claims 5 and 6,
**characterized in that** the low level software program executed by the client stations and permitting access to the data contained in the emulated hard disks may use any suitable network protocol.

38. Method as claimed in claim 11,
**characterized in that** the peripheral driver(s) according to the invention executed by the client stations and permitting access to the data contained in the emulated hard disks may use any suitable network protocol.

39. Method as claimed in claim 20,
**characterized in that** the data write requests issued by the client station operating system to the emulated hard disk(s) are processed in such a way that the written data are stored in the random access memory of the server station.

40. Method as claimed in claim 20,
**characterized in that** the data write requests issued by the client station operating system to the emulated hard disk(s) are processed in such a way that the written data are stored in the virtual memory of the server station.

41. Method as claimed in claim 20,
**characterized in that** the data write requests issued by the client station operating system to the emulated hard disk(s) are processed in such a way that the written data are stored in a data file accessible to the server software.

42. Method as claimed in claim 20,
**characterized in that** the storage space used for storage of the written data may be volatile, i.e. be emptied of data that are stored in each new operating session of the client station operating system or nonvolatile so as to permit the written data of an operating session of the operating system to persist from one client station to another.

43. Method as claimed in claims 15 and 20,
**characterized in that** the volatile character of the redirections of the written data is determined upon initialization of the operating session of the operating system of a client station.

## Patentansprüche

1. Verfahren zur Softwareemulation von Festplatten einer IT-Plattform auf Ebene des Betriebssystems mit parametrierbarer "On-the-fly"-Verwaltung von Schreib- und Leseanfragen,
das Verfahren besteht darin, in einem ersten Schritt eine Darstellung einer realen Festplatte zu erzeugen, in der die Reihenfolge des Ladens und des Ausführens bestimmter Komponenten des Betriebssystems der IT-Plattform angepasst werden kann, dann im Laufe eines zweiten Schritts einen oder mehrere periphere Treiber in die IT-Plattform zu laden, wobei mindestens einer der peripheren Treiber den realen Dialog mit einem Datenspeicherträger ermöglicht, der die Daten der emulierten Festplatte enthält, und dann in einem dritten Schritt das Verhalten einer echten Festplatte für das Betriebssystem zu simulieren,
**dadurch gekennzeichnet, dass**, wenn der Datenträger, der die Daten der emulierten Festplatte beziehungsweise der emulierten Festplatten enthält, ein Träger ist, der die Schreibvorgänge in Echtzeit nicht unterstützt, oder das Festplattenemulationssystem dahingehend parametrisiert ist, die Vorgänge zum Schreiben von Daten direkt in den Träger, der die Daten der emulierten Festplatte enthält, nicht zu akzeptieren, die Anfragen zum Schreiben von Daten, die von dem Betriebssystem an die emulierte Festplatte beziehungsweise die emulierten Festplatten abgegeben werden, so verarbeitet werden, dass die geschriebenen Daten in einem Speicherplatz gespeichert werden, der sich von dem Datenträger unterscheidet, der die Daten der emulierten Festplatte beziehungsweise der emulierten Festplatten enthält.

2. Verfahren nach Anspruch 1,
**dadurch gekennzeichnet, dass** die Verwaltung der Schreibanfragen, die das Betriebssystem an die emulierte Festplatte abgibt, auf Ebene der peripheren Treiber und/oder auf Ebene eines eventuellen Festplatten-Serverdienstes in dem Netz durchgeführt wird, wobei die geschriebenen Daten entsprechend der Parametrisierung der peripheren Treiber und/oder des Serverdienstes der Festplatte in dem Netz gespeichert werden:
■ entweder in dem Speicher - Arbeitsspeicher oder virtueller Speicher -, auf den das Betriebssystem unter Verwendung der emulierten Festplatte zugreifen kann,
■ oder in einem flüchtigen Speicherplatz, auf den das Betriebssystem unter Verwendung der emulierten Festplatte zugreifen kann,
■ oder in einem nichtflüchtigen Speicherplatz, auf den das Betriebssystem unter Verwendung der emulierten Festplatte zugreifen kann,
■ oder in einem flüchtigen Speicherplatz, auf den der Serverdienst emulierter Festplatten in einem IT-Netz zugreifen kann,
■ oder in einem nichtflüchtigen Speicherplatz, auf den der Serverdienst emulierter Festplatten in einem IT-Netz zugreifen kann.

3. Verfahren nach Anspruch 1,
**dadurch gekennzeichnet, dass** die Verwaltung der Leseanfragen, die das Betriebssystem an die emulierte Festplatte abgibt, auf Ebene der peripheren Treiber und/oder auf Ebene eines eventuellen Festplatten-Serverdienstes in dem Netz durchgeführt wird, wobei das Lesen der zuvor geschriebenen Daten in einem Speicherplatz durchgeführt wird:
■ entweder direkt in dem Träger, der die emulierte Festplatte enthält,
■ oder in dem Speicher - Arbeitsspeicher oder virtueller Speicher -, auf den das Betriebssystem unter Verwendung der emulierten Festplatte zugreifen kann,
■ oder in einem flüchtigen Speicherplatz, auf den das Betriebssystem unter Verwendung der emulierten Festplatte zugreifen kann,
■ oder in einem nichtflüchtigen Speicherplatz, auf den das Betriebssystem unter Verwendung der emulierten Festplatte zugreifen kann,
■ oder in einem flüchtigen Speicherplatz, auf den der Serverdienst emulierter Festplatten in einem IT-Netz zugreifen kann,
■ oder in einem nichtflüchtigen Speicherplatz, auf den der Serverdienst emulierter Festplatten in einem IT-Netz zugreifen kann.

4. Verfahren nach Anspruch 1,
**dadurch gekennzeichnet, dass** die dem Betriebssystem einer Clientstation bereitgestellte Festplattenemulation durch einen einzigen monolithischen peripheren Treiber durchgeführt werden kann, der mit dem Betriebssystem auf eine Art und Weise einer Festplatte kommuniziert und der mit dem Träger, der die Daten der emulierten Festplatte enthält, auf für diesen Träger spezifische Weise kommuniziert.

5. Verfahren nach Anspruch 1,
**dadurch gekennzeichnet, dass** die Clientstationen über ein IT-Netz auf die Daten der emulierten Festplatte beziehungsweise der emulierten Festplatten zugreifen können.

6. Verfahren nach Anspruch 1,
**dadurch gekennzeichnet, dass**, wenn eine emulierte Festplatte gebootet werden muss, ein Untergeordnete-Mikrosoftware-Modul für den Zugriff auf die Daten, die in der emulierten Festplatte enthalten sind, verantwortlich ist, indem es eine Schnittstelle derselben Art, die die für den Zugriff auf die Daten echter Festplatten zuständige Mikrosoftware bereitstellt, durch das gebootete Betriebssystem auf der Clientstation bereitstellt.

7. Verfahren nach den Ansprüchen 5 und 6,
**dadurch gekennzeichnet, dass** die Mikrosoftware im Fall von Computern, die Startprogrammspeicher PROM der Art "PXE" verwenden, die von diesen "PROM" verfügbar gemachten Funktionen verwenden können, um die Kommunikationen über das IT-Netz unabhängig von dem Modell der verwendeten Netzschnittstelle zu verwalten.

8. Verfahren nach Anspruch 7,
**dadurch gekennzeichnet, dass** die untergeordnete Mikrosoftware in den Speicher der Clientstation geladen wird und dann ausgeführt wird, indem die von einem Start-"PROM" verfügbar gemachten Funktionen verwendet werden.

9. Verfahren nach Anspruch 6,
**dadurch gekennzeichnet, dass** die untergeordnete Mikrosoftware in den Speicher der Clientstation geladen wird und dann als Komponente der standardmäßigen Basis-Mikrosoftware der Clientstation ausgeführt wird, wobei die untergeordnete Mikrosoftware dieselben Funktionen bereitstellt wie die Dienste eines Zugriffs auf echte Festplatten, die gewöhnlich durch die standardmäßige Basis-Mikrosoftware bereitgestellt werden.

10. Verfahren nach Anspruch 6,
**dadurch gekennzeichnet, dass** die untergeordnete Mikrosoftware von einem Drittdatenträger, der als Peripheriegerät zum Booten von der Clientstation unterstützt wird, in den Speicher der Clientstation geladen wird.

11. Verfahren nach Anspruch 5,
**dadurch gekennzeichnet, dass** mindestens ein geladener und von dem Betriebssystem der Clientstation ausgeführter peripherer Treiber die Funktionen eines Zugriffs auf die Daten, die in den emulierten Festplatten enthalten sind, über das IT-Netz bereitstellt.

12. Verfahren nach Anspruch 1,
**dadurch gekennzeichnet, dass** die Anfragen zum Schreiben von Daten, die von dem Betriebssystem der Clientstation an die emulierte Festplatten beziehungsweise die emulierten Festplatten abgegeben werden, so verarbeitet werden, dass die geschriebenen Daten in dem Arbeitsspeicher der Clientstation gespeichert werden.

13. Verfahren nach Anspruch 1,
**dadurch gekennzeichnet, dass** die Anfragen zum Schreiben von Daten, die von dem Betriebssystem der Clientstation an die emulierte Festplatten beziehungsweise die emulierten Festplatten abgegeben werden, so verarbeitet werden, dass die geschriebenen Daten in dem virtuellen Speicher der Clientstation gespeichert werden.

14. Verfahren nach Anspruch 1,
**dadurch gekennzeichnet, dass** die Anfragen zum Schreiben von Daten, die von dem Betriebssystem der Clientstation an die emulierte Festplatten beziehungsweise die emulierten Festplatten abgegeben werden, so verarbeitet werden, dass die geschriebenen Daten in einer Datendatei gespeichert werden, auf die das Betriebssystem der Clientstation zugreifen kann.

15. Verfahren nach Anspruch 1,
**dadurch gekennzeichnet, dass** die Anfragen zum Schreiben von Daten, die von dem Betriebssystem an die emulierte Festplatten beziehungsweise die emulierten Festplatten abgegeben werden, zu einem gegebenen Zeitpunkt in nur einen Speicherplatz weitergeleitet werden; wobei der Speicherplatz, in den die Schreibvorgänge weitergeleitet werden, sich während einer Sitzung zur Ausführung des Betriebssystems einer Clientstation "on the fly" ändern kann.

16. Verfahren nach Anspruch 1,
**dadurch gekennzeichnet, dass** der Speicherplatz, der zur Speicherung der Schreibvorgänge verwendet wird, flüchtig sein kann, d. h. frei von Daten sein kann, die bei jeder neuen Sitzung zur Ausführung des Betriebssystems einer Clientstation darin gespeichert werden, oder nichtflüchtig sein kann, so dass das Fortbestehen der geschriebenen Daten von einer Sitzung zur Ausführung des Betriebssystems einer Clientstation zu einer anderen ermöglicht wird.

17. Verfahren nach den Ansprüchen 15 und 16,
**dadurch gekennzeichnet, dass** der flüchtige Charakter der Schreibvorgangweiterleitungen bei der Initialisierung der Sitzung zur Ausführung des Betriebssystems einer Clientstation bestimmt wird.

18. Verfahren nach Anspruch 1,
**dadurch gekennzeichnet, dass** die Anfragen zum Lesen von Daten, die von dem Betriebssystem abgegeben werden, während einer Sitzung zur Ausführung des Betriebssystems einer Clientstation in unterschiedlichen Speicherplätzen durchgeführt werden können.

19. Verfahren nach Anspruch 18,
**dadurch gekennzeichnet, dass** die Anfragen zum Lesen von Daten, die von dem Betriebssystem an eine emulierte Festplatte abgegeben werden, gemäß einer Prioritätsreihenfolge in unterschiedlichen Speicherplätzen durchgeführt werden.

20. Verfahren nach Anspruch 5,
**dadurch gekennzeichnet, dass** ein spezifisches Programm, das als "Serversoftware" bezeichnet wird, auf einer der Stationen des IT-Netzes einerseits für Kommunikationen über das Netz mit den Clientstationen, die auf die emulierten Festplatten zugreifen, und andererseits für das Zugreifen auf den Datenträger, der die Daten der emulierten Festplatten enthält, zuständig ist.

21. Verfahren nach Anspruch 20,
**dadurch gekennzeichnet, dass**, um mehreren Clientstationen den gleichzeitigen Zugriff auf ein und dieselbe emulierte Festplatte zu ermöglichen, die Serversoftware dazu in der Lage ist, die Schreibanfragen, die von einer Clientstation A abgegeben werden, spezifisch in einen gegebenen Speicherplatz weiterzuleiten und die Schreibanfragen, die von einer anderen Clientstation B abgegeben werden, in einen anderen gegebenen Speicherplatz weiterzuleiten.

22. Verfahren nach Anspruch 1,
**dadurch gekennzeichnet, dass**, um das Booten von ein und derselben emulierten Festplatte aus und/oder gleichzeitige Zugriffe auf ein und dieselbe emulierte Festplatte oder zu 100 % identische Kopien ein und derselben emulierten Festplatte zu ermöglichen, bestimmte geladene und von den Clientstationen oder von einer Serversoftware ausgeführte Komponenten dazu in der Lage sind, bestimmte Daten, die in der emulierten Festplatte enthalten sind, "on the fly" oder vor ihrer tatsächlichen Verwendung durch das Betriebssystem zu modifizieren.

23. Verfahren nach Anspruch 1,
**dadurch gekennzeichnet, dass** die Emulation selbst für das Betriebssystem der Clientstation auf Ebene der Klasse virtueller Peripheriegeräte vom Typ eines Dateisystems durchgeführt wird.

24. Verfahren nach Anspruch 1,
**dadurch gekennzeichnet, dass** die Emulation für das Betriebssystem der Clientstation auf Ebene der Klasse von Platten-Peripheriegeräten selbst und nicht auf Ebene des Dateisystems durchgeführt wird.

25. Verfahren nach Anspruch 1,
**dadurch gekennzeichnet, dass** die signifikanten Daten, die in der emulierten Festplatte enthalten sind, auf dieselbe von einem Softwaretool, das auf einer Referenzstation ausgeführt wird, von einer realen Festplatte, der so genannten Referenzfestplatte, auf die das Betriebssystem der Referenzstation zugreifen kann, kopiert werden.

26. Verfahren nach den Ansprüchen 23 und 25,
**dadurch gekennzeichnet, dass** das Softwaretool ein Bildverzeichnis erzeugt, das die Daten der emulierten Festplatte enthält.

27. Verfahren nach den Ansprüchen 24 und 25,
**dadurch gekennzeichnet, dass** das Softwaretool eine Bilddatei erzeugt, die die Daten der emulierten Festplatte enthält.

28. Verfahren nach Anspruch 1,
**dadurch gekennzeichnet, dass**, um das Booten von einer emulierten Festplatte aus zu ermöglichen, die Abfolge des Ladens der Komponenten des Betriebssystems eine derartige Anpassung erfordert, dass all die Komponenten des Betriebssystems, von denen die peripheren Treiber abhängen, die den Zugriff auf die emulierte Festplatte ermöglichen, zu dem Zeitpunkt geladen werden und verwendbar sind, zu dem das Betriebssystem auf die emulierte Festplatte zugreifen muss, wobei es die peripheren Treiber und nicht mehr die Funktionen der "Firmware" verwendet.

29. Verfahren nach Anspruch 20,
**dadurch gekennzeichnet, dass**, um den gleichzeitigen Zugriff durch mehrere Clientstationen auf ein und dieselbe emulierte Festplatte zu beschleunigen, deren Daten in einem Datenträger enthalten sind, auf den die Serverstation zugreifen kann, die Daten im Rahmen der Festplattenemulation in ihrer Gesamtheit und ein einziges Mal von der Serversoftware an die Clientstationen gesendet werden, wobei "Broadcast"- oder "Multicast"-Mechanismen anstelle von so genannten "Unicast"-Mechanismen verwendet werden.

30. Verfahren nach Anspruch 29,
**dadurch gekennzeichnet, dass** die mittels "Broadcast" oder "Multicast" von der Serverstation gesendeten Daten von den Clientstationen gespeichert werden, die diese in einem lokalen Cache annehmen, der sich in dem Speicher der Clientstationen befindet.

31. Verfahren nach Anspruch 29,
**dadurch gekennzeichnet, dass** eine Anfrage zum Lesen von Daten in der emulierten Festplatte, die von dem Betriebssystem einer Clientstation abgegeben wird, eine explizite Leseanforderung erzeugt, die nur dann an die Serverstation abgegeben wird, wenn die Daten nicht bereits in dem lokalen Cache vorliegen.

32. Verfahren nach Anspruch 31,
**dadurch gekennzeichnet, dass** die gelesenen Daten in dem lokalen Cache, wenn sie von der Clientstation gelesen werden, herausgenommen werden, um in dem lokalen Cache Platz frei zu machen.

33. Verfahren nach Anspruch 29,
**dadurch gekennzeichnet, dass** die Entscheidung zum Senden von Daten mittels "Multicast/Broadcast" oder mittels "Unicast" im Rahmen der erfindungsgemäßen Festplattenemulation auf Ebene der Serversoftware durchgeführt wird, die die zur Festplattenemulation erforderlichen Funktionalitäten den Clientstationen bereitstellt.

34. Verfahren nach Anspruch 29,
**dadurch gekennzeichnet, dass** die Clientstationen ihr Abonnement eines Empfangs von Daten, die über "Broadcast/Multicast" von der Serverstation im Rahmen der Festplattenemulation gesendet werden, modifizieren können.

35. Verfahren nach Anspruch 30,
**dadurch gekennzeichnet, dass** die Clientstationen aus dem lokalen Cache die Daten löschen können, die dieser seit mehr als einem gegebenen und parametrisierbaren Zeitpunkt aufweist.

36. Verfahren nach Anspruch 5,
**dadurch gekennzeichnet, dass** das Servermodul, das Clientstationen die Daten, die in den emulierten Festplatten enthalten sind, zur Verfügung stellt, ein beliebiges geeignetes Netzprotokoll verwenden kann.

37. Verfahren nach den Ansprüchen 5 und 6,
**dadurch gekennzeichnet, dass** das untergeordnete Softwareprogramm, das von den Clientstationen ausgeführt wird und den Zugriff auf die Daten, die in den emulierten Festplatten enthalten sind, ermöglicht, ein beliebiges geeignetes Netzprotokoll verwenden kann.

38. Verfahren nach Anspruch 11,
**dadurch gekennzeichnet, dass** der erfindungsgemäße periphere Treiber beziehungsweise die erfindungsgemäßen peripheren Treiber, der beziehungsweise die von den Clientstationen ausgeführt wird beziehungsweise werden und den Zugriff auf die Daten, die in den emulierten Festplatten enthalten sind, ermöglicht beziehungsweise ermöglichen, ein beliebiges geeignetes Netzprotokoll verwenden kann beziehungsweise können.

39. Verfahren nach Anspruch 20,
**dadurch gekennzeichnet, dass** die Anfragen zum Schreiben von Daten, die von dem Betriebssystem der Clientstationen an die emulierte Festplatte beziehungsweise die emulierten Festplatten abgegeben werden, so verarbeitet werden, dass die geschriebenen Daten in dem Arbeitsspeicher der Serverstation gespeichert werden.

40. Verfahren nach Anspruch 20,
**dadurch gekennzeichnet, dass** die Anfragen zum Schreiben von Daten, die von dem Betriebssystem der Clientstationen an die emulierte Festplatte beziehungsweise die emulierten Festplatten abgegeben werden, so verarbeitet werden, dass die geschriebenen Daten in dem virtuellen Speicher der Serverstation gespeichert werden.

41. Verfahren nach Anspruch 20,
**dadurch gekennzeichnet, dass** die Anfragen zum Schreiben von Daten, die von dem Betriebssystem der Clientstationen an die emulierte Festplatte beziehungsweise die emulierten Festplatten abgegeben werden, so verarbeitet werden, dass die geschriebenen Daten in einer Datendatei gespeichert werden, auf die die Serversoftware zugreifen kann.

42. Verfahren nach Anspruch 20,
**dadurch gekennzeichnet, dass** der Speicherplatz, der zur Speicherung der Schreibvorgänge verwendet wird, flüchtig sein kann, d. h. frei von Daten sein kann, die bei jeder neuen Sitzung zur Ausführung des Betriebssystems einer Clientstation darin gespeichert werden, oder nichtflüchtig sein kann, so dass das Fortbestehen der geschriebenen Daten von einer Sitzung zur Ausführung des Betriebssystems einer Clientstation zu einer anderen ermöglicht wird.

43. Verfahren nach den Ansprüchen 15 und 20,
**dadurch gekennzeichnet, dass** der flüchtige Charakter der Schreibvorgangweiterleitungen bei der Initialisierung der Sitzung zur Ausführung des Betriebssystems einer Clientstation bestimmt wird.
